# EUROPEAN PATENT SPECIFICATION

(11) **EP 2 413 042 B1**
(45) Date of publication and mention of the grant of the patent: **09.09.2020**
(21) Application number: 09842246.2
(22) Date of filing: 26.03.2009
(51) Int. Cl.: F24D 3/08, F24D 3/10, F24D 19/10, F24D 3/18

(54) **TEMPERATURE REGULATOR, FLUID SUPPLY SYSTEM, HEATING SYSTEM, METHOD OF FIXING TEMPERATURE REGULATOR, AND FLUID SUPPLY METHOD**
TEMPERATURREGLER, FLUIDVERSORGUNGSSYSTEM, HEIZSYSTEM, VERFAHREN ZUR BEFESTIGUNG DES TEMPERATURREGLERS UND FLUIDVERSORGUNGSVERFAHREN
RÉGULATEUR DE TEMPÉRATURE, SYSTÈME D'ALIMENTATION EN FLUIDE, SYSTÈME DE CHAUFFAGE, PROCÉDÉ DE MONTAGE DU RÉGULATEUR DE TEMPÉRATURE, ET PROCÉDÉ D'ALIMENTATION EN FLUIDE

(43) Date of publication of application: 01.02.2012
(73) Proprietor: Mitsubishi Electric Corporation, Tokyo 100-8310 (JP)
(72) Inventor: USHIJIMA, Takahiro, Tokyo 100-8310 (JP); OYA, Ryo, Tokyo 100-8310 (JP); OKADA, Kazuki, Tokyo 100-8310 (JP)
(74) Representative: Pfenning, Meinig & Partner mbB
(86) International application number: PCT/JP2009/056128
(87) International publication number: WO 2010/109632

(56) References cited:
- WO-A1-2007/051967
- JP-A- 5 180 450
- JP-A- 10 196 974
- JP-A- 2001 147 022
- JP-A- 2002 243 176
- US-A- 3 958 555

## Description

### Technical Field

This invention relates to a technique to adjust the temperature of a fluid such as water (hot water), for example.

### Background Art

Hot-water heating appliances require hot water at various temperatures depending on specifications. That is, hot-water heating appliances include heating appliances that require hot water at relatively high temperatures (high-temperature heating appliances) and heating appliances that require hot water at relatively low temperatures (low-temperature heating appliances).

There is a heating system in which a high-temperature heating appliance and a low-temperature heating appliance are connected in series. In this heating system, hot water at a high temperature heated by a heat source is first supplied to the high-temperature heating appliance. Then, the hot water at a lower temperature from which heat has been radiated by the high-temperature heating appliance is supplied to the low-temperature heating appliance.

Patent Literatures 1 and 2 discuss a heating system in which a high-temperature heating appliance and a low-temperature heating appliance are connected in parallel. In this heating system, the high-temperature heating appliance is supplied with hot water at a high temperature heated by a heat source. On the other hand, the low-temperature heating appliance is supplied with the hot water at an adjusted temperature obtained by mixing with a mixing valve the hot water at a high temperature heated by the heating apparatus and the hot water at a low temperature, namely, return water from the low-temperature heating appliance itself.

Patent Literatures 3, 4, and 5 also discuss a heating system in which a high-temperature heating appliance and a low-temperature heating appliance are connected in parallel. In this heating system, the high-temperature heating appliance is supplied with hot water at a high temperature heated by a heat source. On the other hand, the low-temperature heating appliance is supplied with the hot water at an adjusted temperature obtained by exchanging heat by a heat exchanger between the hot water at a high temperature heated by the heat source and the hot water at a low temperature, namely, return water from the low-temperature heating appliance itself.

Patent Literature 1: JP 5-118566 A

Patent Literature 2: JP 2004-198055 A

Patent Literature 3: JP 62-238927 A

Patent Literature 4: JP 07-006612 A

Patent Literature 5: JP 2006-046809 A

US 3,958,555 is directed to a fluid supply system for supplying a fluid draw-off such as for example domestic showers includes a fluid blending valve discharging blended liquid into a recirculation pipeline delivering to the draw-off and returning to a cold inlet of the blending valve, liquid recirculation occurring when the draw-off is closed, and a pump is preferably provided to ensure satisfactory recirculation. At least a portion of the recycled liquid is fed to a heat exchanger. To ensure that the temperature of the recycled liquid is maintained at a desired value, which is particularly desirable in the case of a shower installation where excess temperature can be physically dangerous, an additional thermostatic control valve is provided responsive to the recycled liquid temperature and operatively associated with the heat exchanger to maintain the recycled liquid temperature.

### Disclosure of Invention

### Technical Problem

In a heating system in which a high-temperature heating appliance and a low-temperature heating appliance are connected in series, the temperature of hot water supplied to the low-temperature heating appliance varies depending on the magnitude of the load of the high-temperature heating appliance. For this reason, when the hot water is supplied at a temperature according to the magnitude of the load of the high-temperature heating appliance, the temperature of the hot water supplied to the low-temperature heating appliance is not stable. This means that it is difficult to supply the hot water at a temperature required by the high-temperature heating appliance as well as to supply the hot water at a temperature required by the low-temperature heating appliance.

In the heating system in which the high-temperature heating appliance and the low-temperature heating appliance are connected in parallel discussed in Patent Literatures 1 and 2, the flow volume of the return water to the heat source varies depending on the volume of the return water mixed with the hot water at a high temperature. For this reason, a measure must be taken to stabilize the temperature of the hot water discharged from the heat source irrespective of the flow volume of the return water to the heat source. If this measure is not implemented, the temperature of the hot water discharged from the heat source becomes unstable. That is, when the hot water is supplied at a temperature according to the magnitude of the load of the low-temperature heating appliance, both the temperature and the flow volume of the hot water supplied to the high-temperature heating appliance become unstable. This means that it is difficult to supply the hot water at a temperature required by the high-temperature heating appliance as well as to supply the hot water at a temperature required by the low-temperature heating appliance.

Further, in this heating system, a water circuit must be configured such that the pressure in a supply pipe from the heat source to the mixing valve and the pressure in a return pipe from the low-temperature heating appliance are greater than the pressure in a supply pipe from the mixing valve to the low-temperature heating appliance. To this end, a pump for mixing purposes may be required.

In the heating system in which the high-temperature heating appliance and the low-temperature heating appliance are connected in parallel discussed in Patent Literatures 3, 4, and 5, the range of temperatures to which the hot water at a high temperature heated by the heat source is cooled is determined by the size of the heat exchanger. For this reason, when the high-temperature heating appliance is supplied with the hot water at a temperature according to the magnitude of the load of the high-temperature heating appliance, the low-temperature heating appliance cannot be supplied with the hot water at a temperature according to the magnitude of the load of the low-temperature heating appliance. This means that it is difficult to supply the hot water at a temperature required by the high-temperature heating appliance as well as to supply the hot water at a temperature required by the low-temperature heating appliance.

This invention aims to simultaneously supply a fluid at a required temperature to a high-temperature heating appliance and a fluid at a required temperature to a low-temperature heating appliance, for example. This invention also aims to enhance efficiency by collecting surplus heat when the temperature of the fluid is adjusted.

### Solution to Problem

A temperature adjusting apparatus according to the present invention includes, for example:
a heat exchanger;
a parent supply pipe arranged for being flowed through by a high-temperature fluid to be supplied to a high-temperature radiator;
a high-temperature pipe which is branched from the parent supply pipe and is connected to the high-temperature radiator;
a first supply pipe which is branched from the parent supply pipe and passes through the heat exchanger;
a second supply pipe which is branched from the parent supply pipe;
a mixed supply pipe arranged for being flowed through by a mixed fluid being a mixture of a first portion of the fluid which has flowed through the first supply pipe and a second portion of the fluid which has flowed through the second supply pipe, wherein the mixed supply pipe is connected to a low-temperature radiator;
a return pipe arranged for being flowed through by the mixed fluid which has been supplied to the low-temperature radiator and from which heat has been radiated, the return pipe passing through the heat exchanger; and
a temperature sensor provided at the mixed supply pipe.

The first supply pipe and the second supply pipe are formed by being branched from a parent supply pipe, and the fluid which has flowed through the parent supply pipe flows through the first supply pipe and the second supply pipe.

Preferably, the fluid which has flowed through the return pipe and has been heated by a heating apparatus flows through the parent supply pipe.

According to a comparative example, the temperature adjusting apparatus further includes:
a third supply pipe formed by being branched from the parent supply pipe and connected to another radiator different from the radiator, the another radiator utilizing the fluid at a higher temperature than a temperature of the fluid utilized by the radiator,
wherein the fluid at the higher temperature to be supplied to the another radiator via the third supply pipe flows through the parent supply pipe.

According to the present invention, the temperature adjusting apparatus further includes:
a mixture adjusting valve that is configured to adust a temperature of the mixted fluid by adjusting a mixture ratio of the first portion of the fluid and the second portion of the fluid in the mixed fluid.

According to the present invention, the temperature adjusting apparatus further includes:
a control unit that is configured to measure the temperature of the mixed fluid by using the temperature sensor provided at the mixed supply pipe, and to adjust the degree of opening of the mixture adjusting valve according to the measured temperature.

Preferably, the mixed supply pipe includes a flow volume adjusting valve that adjusts a flow volume of the fluid to be supplied to the radiator.

A fluid supply system includes, for example:
a heating apparatus that heats a fluid;
a heat exchanger;
a first supply pipe through which flows the fluid heated by the heating apparatus and to be supplied to a radiator, the first supply pipe passing through the heat exchanger;
a second supply pipe through which flows the fluid heated by the heating apparatus and to be supplied to the radiator;
a mixed supply pipe through which flows a mixed fluid to be supplied to the radiator, the mixed fluid being a mixture of a first fluid which has flowed through the first supply pipe and a second fluid which has flowed through the second supply pipe; and
a return pipe through which flows the fluid which has been supplied to the radiator and from which heat has been radiated, the return pipe passing through the heat exchanger,
wherein the heating apparatus heats the fluid which has flowed through the return pipe.

A heating system includes, for example:
a heating apparatus that heats a fluid;
a heat exchanger;
a first supply pipe through which flows the fluid heated by the heating apparatus, the first supply pipe passing through the heat exchanger;
a second supply pipe through which flows the fluid heated by the heating apparatus;
a mixed supply pipe through which flows a mixed fluid, the mixed fluid being a mixture of a first fluid which has flowed through the first supply pipe and a second fluid which has flowed through the second supply pipe;
a heating appliance to which the fluid which has flowed through the mixed supply pipe is supplied, the heating appliance radiating heat from the fluid; and
a return pipe through which flows the fluid which has been supplied to the heating appliance, the return pipe passing through the heat exchanger,
wherein the heating apparatus heats the fluid which has flowed through the return pipe.

An installation method of a temperature adjusting apparatus according to the present invention includes, for example:
connecting the temperature adjusting apparatus according to any one of claims 1 to 3 to a heating apparatus for heating a fluid such that a fluid which has flowed through the return pipe is supplied to the heating apparatus, and the fluid heated by the heating apparatus is supplied to the parent supply pipe; and
connecting the temperature adjusting apparatus to the low-temperature radiator such that the fluid which has flowed through the mixed supply pipe is supplied to the low-temperature radiator and the fluid which has been supplied to the radiator is supplied to the return pipe.

A fluid supply method includes, for example:
branching a parent supply pipe through which flows a fluid to be supplied to a radiator into a first supply pipe and a second supply pipe;
exchanging heat between the fluid flowing through the first supply pipe and the fluid which has been supplied to the radiator; and
joining the first supply pipe and the second supply pipe again, and supplying a mixed fluid to the radiator, the mixed fluid being a mixture of the fluid which has flowed through the first supply pipe and the fluid which has flowed through the second supply pipe.

A temperature adjusting apparatus includes, for example:
a heat exchanger;
a supply pipe through which flows a fluid to be supplied to a radiator, the supply pipe passing through the heat exchanger;
a parent return pipe through which flows the fluid which has been supplied to the radiator and from which heat has been radiated;
a first return pipe which is branched from the parent return pipe, and through which flows the fluid which has flowed through the parent return pipe, the first return pipe passing through the heat exchanger; and
a second return pipe which is branched from the parent return pipe, and through which flows the fluid which has flowed through the parent return pipe.

### Advantageous Effects of Invention

A temperature adjusting apparatus according to this invention exchanges heat between a fluid flowing through a first supply pipe and a fluid flowing through a return pipe, and also mixes the fluid flowing through the first supply pipe and a fluid flowing through the second supply pipe and supplies a mixed fluid to a radiator. In this way, the temperature adjusting apparatus can adjust the temperature of the fluid to be supplied to the radiator. Surplus heat can also be collected by the fluid flowing through the return pipe.

### Description of Preferred Embodiments

### First embodiment

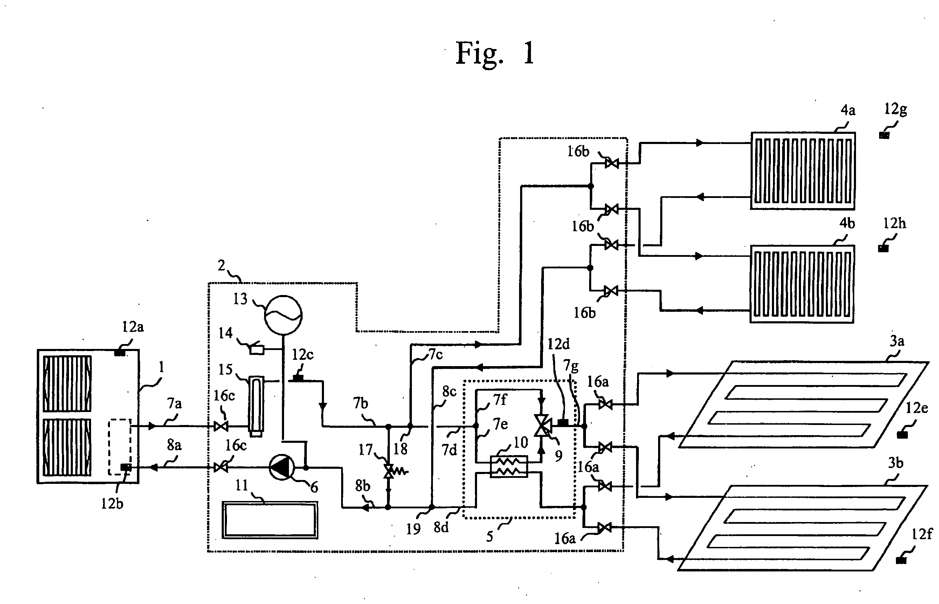

Fig. 1 is a fluid circuit diagram of a heating system according to a first embodiment. In the following description, water (hot water) will be used as an example of a fluid. That is, the heating system shown in Fig. 1 is a hot-water heating system.

The hot-water heating system includes a heat source 1, a hydro unit 2, low-temperature heating appliances 3a and 3b, and high-temperature heating appliances 4a and 4b. In the following description, the low-temperature heating appliances 3a and 3b will be collectively referred to as a low-temperature heating appliance 3. Likewise, the high-temperature heating appliances 4a and 4b will be collectively referred to as a high-temperature heating appliance 4. The heat source 1 is an example of a heating apparatus. The low-temperature heating appliance 3 and the high-temperature heating appliance 4 are examples of a radiator. A system composed of the heat source 1 and the hydro unit 2 is a fluid supply system.

The heat source 1 heats hot water supplied from a return pipe 8a and supplies the hot water to a supply pipe 7a. The heat source 1 is for example a heat pump apparatus. The heat source 1 includes a plurality of temperature sensors 12a and 12b. Each temperature sensor 12 measures the temperature of outdoor air, the temperature of the hot water supplied from the return pipe 8a, and so on. The heat source 1 controls a heating operation based on the measured temperatures. The heat source 1 is not limited to the heat pump apparatus, and may also be a boiler or the like.

The low-temperature heating appliance 3 is a heating appliance that requires the hot water at a temperature lower than a temperature of the hot water required by the high-temperature heating appliance 4. The low-temperature heating appliance 3 is for example a floor heating appliance, and requires the hot water at approximately 30 °C to 40 °C.

The high-temperature heating appliance 4 is a heating appliance that requires the hot water at a temperature higher than a temperature of the hot water required by the low-temperature heating appliance 3. The high-temperature heating appliance 4 is for example a radiator (a panel heater), and requires the hot water at approximately 50°C.

The hydro unit 2 supplies the hot water heated by the heat source 1 to the low-temperature heating appliance 3 and the high-temperature heating appliance 4. More specifically, the hydro unit 2 simultaneously supplies the hot water at the temperature required by the low-temperature heating appliance 3 to the low-temperature heating appliance 3 and the hot water at the temperature required by the high-temperature heating appliance 4 to the high-temperature heating appliance 4.

The hydro unit 2 includes supply pipes 7a, 7b, 7c, 7d, 7e, 7f, and 7g, and return pipes 8a, 8b, 8c, and 8d. In the following description, the supply pipes 7a, 7b, 7c, 7d, 7e, 7f, and 7g will be collectively referred to as a supply pipe 7. Likewise, the return pipes 8a, 8b, 8c, and 8d will be collectively referred to as a return pipe 8. The supply pipe 7 is a pipe through which flows the hot water to be supplied to the low-temperature heating appliance 3 and the high-temperature heating appliance 4. The return pipe 8 is a pipe through which flows the hot water (return water) which has been supplied to the low-temperature heating appliance 3 and the high-temperature heating appliance 4.

The supply pipe 7a is connected at one end thereof to the heat source 1. A heater 15 is provided at the other end of the supply pipe 7a. The heater 15 further heats the hot water heated by the heat source 1. That is, when the hot water cannot be heated by the heat source 1 to the temperature required by the high-temperature heating appliance 4, the hot water is further heated by the heater 15 to the temperature required by the high-temperature heating appliance 4. The heater 15 is for example an electric heater. The supply pipe 7b is connected at one end thereof to the heater 15. The other end of the supply pipe 7b is branched into the supply pipe 7c and the supply pipe 7d (a parent supply pipe) at a supply pipe branching point 18. The supply pipe 7c is connected to the high-temperature heating appliance 4. On the other hand, the supply pipe 7d is further branched into the supply pipe 7e (a first supply pipe) and the supply pipe 7f (a second supply pipe). The supply pipe 7e and the supply pipe 7f are joined again at a mixing valve 9 so as to form the supply pipe 7g (a mixed supply pipe). That is, the supply pipe 7e and the supply pipe 7f are pipes provided in parallel. The supply pipe 7e passes through a heat exchanger 10. The supply pipe 7g is branched and connected to the low-temperature heating appliance 3.

The return pipe 8c is connected at one end thereof to the high-temperature heating appliance 4. The return pipe 8d is connected at one end thereof to the low-temperature heating appliance 3. The other end of the return pipe 8c and the other end of the return pipe 8d are joined at a return pipe joining point 19 so as to form the return pipe 8b. The return pipe 8d passes through the heat exchanger 10 through which the supply pipe 7e passes. That is, heat exchange is effected between the hot water flowing through the supply pipe 7e and the hot water flowing through the return pipe 8d. A circulating pump 6 is provided at an end of the return pipe 8b opposite from the return pipe joining point 19. The circulating pump 6 is a pump that circulates the hot water. The return pipe 8a is connected at one end thereof to the circulating pump 6, and at the other end thereof to the heat source 1.

Here, a circuit configured with the supply pipes 7d, 7e, 7f, and 7g, the return pipe 8d, the mixing valve 9, and the heat exchanger 10 will be referred to as a hot-water temperature adjusting apparatus 5 (a temperature adjusting circuit). In Fig. 1, the hot-water temperature adjusting apparatus 5 is indicated by dashed lines. In the hot-water temperature adjusting apparatus 5, the hot water heated by the heater 15 to the temperature required by the high-temperature heating appliance 4 is cooled to the temperature required by the low-temperature heating appliance 3.

A cycle of the hot water during operation of the hot-water heating system will be described.

Operation of the circulating pump 6 causes the hot water to circulate among the heat source 1, the hydro unit 2, the low-temperature heating appliance 3, and the high-temperature heating appliance 4.

First, the hot water discharged from the circulating pump 6 is heated by the heat source 1. The hot water heated by the heat source 1 flows through the supply pipe 7a. When the hot water cannot be heated by the heat source 1 to the temperature required by the high-temperature heating appliance 4, the hot water is heated by the heater 15 to the temperature required by the high-temperature heating appliance 4. The hot water heated by the heater 15 flows through the supply pipe 7b and is branched into the supply pipe 7c and the supply pipe 7d at the supply pipe branching point 18. The hot water flowing through the supply pipe 7c is supplied to the high-temperature heating appliance 4, and heat from the hot water is radiated by the high-temperature heating appliance 4. On the other hand, the hot water flowing through the supply pipe 7d is branched into the supply pipe 7e and the supply pipe 7f, is joined again at the mixing valve 9, and flows through the supply pipe 7g. At this time, the hot water is adjusted to the temperature required by the low-temperature heating appliance 3 in the hot-water temperature adjusting apparatus 5. A process in the hot-water temperature adjusting apparatus 5 will be described later. The hot water flowing through the supply pipe 7g is supplied to the low-temperature heating appliance 3, and heat from the hot water is radiated by the low-temperature heating appliance 3.

The hot water from which heat has been radiated by the high-temperature heating appliance 4 flows through the return pipe 8c. On the other hand, the hot water from which heat has been radiated by the low-temperature heating appliance 3 flows through the return pipe 8d. The hot water flowing through the return pipe 8c and the hot water flowing through the return pipe 8d are joined at the return pipe joining point 19. The joined hot water flows through the return pipe 8b and is absorbed by the circulating pump 6.

By repeating the above process, the low-temperature heating appliance 3 is supplied with the hot water at a required temperature and the high-temperature heating appliance 4 is supplied with the hot water at a required temperature simultaneously.

The process in the hot-water temperature adjusting apparatus 5 will be described.

As described above, the hot water at the temperature required by the high-temperature heating appliance 4 (high-temperature water) flows through the supply pipe 7b. Thus, the high-temperature water also flows through the supply pipe 7d branched from the supply pipe 7b. Likewise, the high-temperature water also flows into the supply pipe 7e and the supply pipe 7f branched from the supply pipe 7d. As described above, heat exchange is effected between the hot water flowing through the supply pipe 7e and the hot water flowing through the return pipe 8d. The hot water flowing through the return pipe 8d is the hot water from which heat has been radiated by the low-temperature heating appliance 3 and thus has a lower temperature (low-temperature water). That is, heat exchange is effected between the high-temperature water flowing through the supply pipe 7e and the low-temperature water flowing through the return pipe 8d, so that the high-temperature water flowing through the supply pipe 7e is cooled and the low-temperature water flowing through the return pipe 8d is heated. The cooled hot water which has flowed through the supply pipe 7e (a first hot water) and the hot water which has flowed through the supply pipe 7f (a second hot water) are mixed by the mixing valve 9 so as to produce mixed hot water. The mixed hot water flows through the supply pipe 7g and is supplied to the low-temperature heating appliance 3.

A control unit 11 adjusts the degree of opening of the mixing valve 9, thereby adjusting the flow volume of the hot water flowing through the supply pipe 7e and the flow volume of the hot water flowing through the supply pipe 7f. That is, by adjusting the degree of opening of the mixing valve 9, the control unit 11 adjusts the ratio of the first hot water and the second hot water in the mixed hot water. Here, the control unit 11 measures the temperature of the mixed hot water flowing through the supply pipe 7g by using a temperature sensor 12d provided at the supply pipe 7g, and adjusts the degree of opening of the mixing valve 9 according to the measured temperature.

For example, when the ratio between the degree of opening of the mixing valve 9 at the side of the supply pipe 7e and the degree of opening of the mixing valve 9 at the side of the supply pipe 7f is "5:5", the mixture ratio of the first hot water and the second hot water is "5:5". Accordingly, the mixed hot water has a temperature midway between the temperature of the first hot water and the temperature of the second hot water. When the mixing valve 9 is fully opened at the side of the supply pipe 7e and the mixing valve 9 is fully closed at the side of the supply pipe 7f, the mixture ratio of the first hot water and the second hot water is "10:0". Accordingly, the mixed hot water has the temperature of the first hot water. Conversely, when the mixing valve 9 is fully closed at the side of the supply pipe 7e and the mixing valve 9 is fully opened at the side of the supply pipe 7f, the mixture ratio of the first hot water and the high-temperature second hot water is "0:10". Accordingly, the mixed hot water has the temperature of the second hot water. In this way, it is possible to produce the hot water at the temperature required by the low-temperature heating appliance 3 irrespective of changes in the temperature of the high-temperature water flowing through the supply pipe 7d and the temperature of the low-temperature water flowing through the return pipe 8d. In other words, it is possible to produce the hot water at the temperature required by the low-temperature heating appliance 3 irrespective of changes in the temperature of the hot water required by the high-temperature heating appliance 4 and the load of the low-temperature heating appliance 3.

As described above, heat exchange is effected between the high-temperature water flowing through the supply pipe 7e and the low-temperature water flowing through the return pipe 8d, thereby cooling the high-temperature water flowing through the supply pipe 7e and adjusting the temperature of the hot water to be supplied to the low-temperature heating appliance 3. During this heat exchange, not only the high-temperature water flowing through the supply pipe 7e is cooled, but also the low-temperature water flowing through the return pipe 8d is heated. That is, when the temperature of the hot water is adjusted, surplus heat is collected by the hot water flowing through the return pipe 8d.

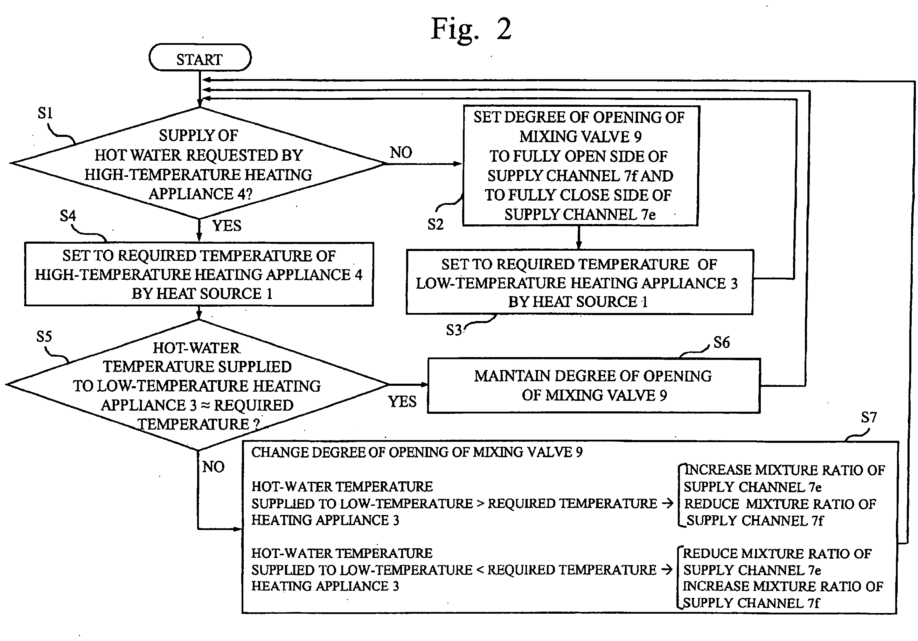

A process of the control unit 11 to adjust the temperature of the mixed hot water will be described. Fig. 2 is a flowchart showing the process of the control unit 11 to adjust the temperature of the mixed hot water. The control unit 11 is for example a microcomputer or the like.

The control unit 11 determines whether or not there is a request from the high-temperature heating appliance 4 for supply of the hot water (S1). If there is no request for supply of the hot water (NO at S1), the control unit 11 has the mixing valve 9 fully opened at the side of the supply pipe 7f and fully closed at the side of the supply pipe 7e (S2). Then, the control unit 11 has the heat source 1 (and the heater 15) heat the hot water to the temperature required by the low-temperature heating appliance 3 (S3).

On the other hand, if there is a request for supply of the hot water (YES at S1), the control unit 11 has the heat source 1 (and the heater 15) heat the hot water to the temperature required by the high-temperature heating appliance 4 (S4). Next, the control unit 11 determines whether or not the temperature of the hot water to be supplied to the low-temperature heating appliance 3 (a hot-water temperature) is equal (or close) to the temperature required by the low-temperature heating appliance 3 (a required temperature) (S5). That is, the control unit 11 measures the temperature of the mixed hot water flowing through the supply pipe 7g by using the temperature sensor 12d provided at the supply pipe 7g, and determines whether or not the measured temperature (the hot-water temperature) is equal to the temperature required by the low-temperature heating appliance 3 (the required temperature). If the hot-water temperature is equal to the required temperature (YES at S5), the control unit 11 does not change the degree of opening of the mixing valve 9 and maintains the current state (S6). On the other hand, if the hot-water temperature is not equal to the required temperature (NO at S5), the control unit 11 changes the degree of opening of the mixing valve 9 (S7). If the hot-water temperature is higher than the required temperature (the hot-water temperature > the required temperature), the control unit 11 widens the degree of opening at the side of the supply pipe 7e and narrows the degree of opening at the side of the supply pipe 7f. That is, the control unit 11 increases the ratio of the first hot water and reduces the ratio of the second hot water in the mixed hot water. On the other hand, if the hot-water temperature is lower than the required temperature (the hot-water temperature < the required temperature), the control unit narrows the degree of opening at the side of the supply pipe 7e and widens the degree of opening at the side of the supply pipe 7f. That is, the control unit reduces the ratio of the first hot water and increases the ratio of the second hot water in the mixed hot water.

As has been described, in the hot-water heating system, the hot water at the temperature required by the low-temperature heating appliance 3 can be supplied to the low-temperature heating appliance 3, and the hot water at the temperature required by the high-temperature heating appliance 4 can be supplied to the high-temperature heating appliance 4 simultaneously.

Further, when the temperature of the hot water to be supplied to the low-temperature heating appliance 3 is adjusted, surplus heat is collected into the return water, thereby enhancing thermal efficiency and leading to reduced energy consumption.

The hydro unit 2 includes a temperature sensor 12c at the supply pipe 7b. By using the temperature sensor 12c, the control unit 11 measures the temperature of the hot water flowing through the supply pipe 7b. Based on the temperature measured by the temperature sensor 12c, the control unit 11 controls heating by the heat source 1 (and the heater 15). When the hot water can be heated by the heat source 1 to the temperature required by the high-temperature heating appliance 4 (or the low-temperature heating appliance 3 in another case), heating by the heater 15 is not required.

The hydro unit 2 also includes temperature sensors 12e, 12f, 12g, and 12h respectively in a space in which the low-temperature heating appliance 3 is installed and in a space in which the high-temperature heating appliance 4 is installed. By using the temperature sensors 12e, 12f, 12g, and 12h, the control unit 11 measures the temperatures of the spaces in which the low-temperature heating appliance 3 and the high-temperature heating appliance 4 are installed. For example, based on the temperatures measured by the temperature sensors 12e, 12f, 12g, and 12h and the temperature (the temperature of outdoor air) measured by the temperature sensor 12a, the control unit 11 determines the temperature of the hot water required by the low-temperature heating appliance 3 and the temperature of the hot water required by the high-temperature heating appliance 4. Alternatively, the temperature of the hot water required by the low-temperature heating appliance 3 and the temperature of the hot water required by the high-temperature heating appliance 4 may be determined by an instruction from a user of the hot-water heating system.

The hydro unit 2 includes valves 16a at the supply pipe 7g and the return pipe 8d connected to the low-temperature heating appliance 3. Likewise, the hydro unit 2 includes valves 16b at the supply pipe 7c and the return pipe 8c connected to the high-temperature heating appliance 4. By using the temperature sensors 12e, 12f, 12g, and 12h, the control unit 11 measures the temperature of the space in which the low-temperature heating appliance 3 is installed and the temperature of the space in which the high-temperature heating appliance 4 is installed. Based on the measured temperatures, the control unit 11 controls the degree of opening of the valves 16a and 16b, thereby controlling the flow volume of the hot water supplied to the low-temperature heating appliance 3 and the flow volume of the hot water supplied to the high-temperature heating appliance 4. In this way, the control unit 11 controls the temperature of the low-temperature heating appliance 3 and the temperature of the high-temperature heating appliance 4.

That is, the hydro unit 2 may control the temperature of the low-temperature heating appliance 3 and the temperature of the high-temperature heating appliance 4 by controlling the temperature of the hot water by using the heat source 1, the heater 15, and the hot-water temperature adjusting apparatus 5 as well as by controlling the flow volume of the hot water supplied to the low-temperature heating appliance 3 and the flow volume of the hot water supplied to the high-temperature heating appliance 4 by using the valves 16a and 16b. In this way, the accuracy of temperature control can be enhanced.

In Fig. 1, the valves 16a and 16b are provided both at the supply pipe 7 and at the return pipe 8. However, the valves 16a and 16b may only be provided either at the supply pipe 7 or at the return pipe 8.

The hydro unit 2 also includes an anti-freezing pipe 17 that connects the supply pipe 7b and the return pipe 8b. When the air temperature is low and if the hot-water heating system remains unused and a state in which no hot water circulates in the pipes continues, there is a risk that the water in the pipes may freeze. Thus, when the air temperature is low, the hot water is circulated among the heat source 1, the supply pipes 7a and 7b, the anti-freezing pipe 17, and the return pipes 8b and 8a in order to prevent freezing of the water in the pipes.

The hydro unit 2 also includes an expansion tank 13 that temporarily stores the hot water that has expanded by heating. When the hot water expands, the expansion tank 13 stores a portion of the hot water that has expanded in order to prevent the pressure in the pipes (the supply pipe 7, the return pipe 8) from rising. The hydro unit 2 further includes a pressure relief valve 14 that releases the hot water in the pipes to the outside when the pressure in the pipes can no longer be prevented from rising by the expansion tank 13.

### Second embodiment and comparative embodiments

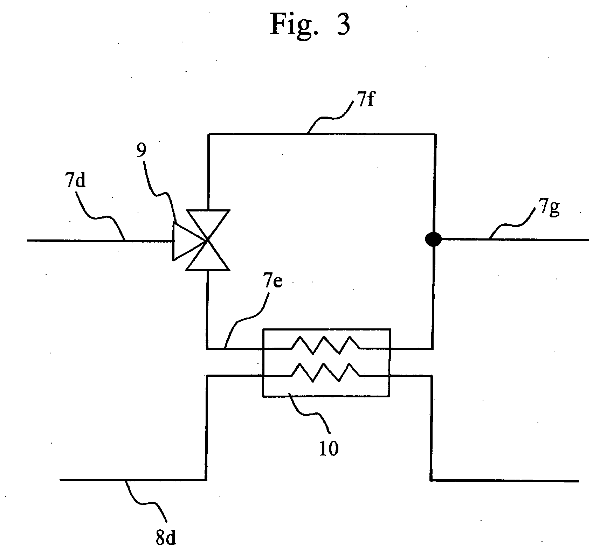

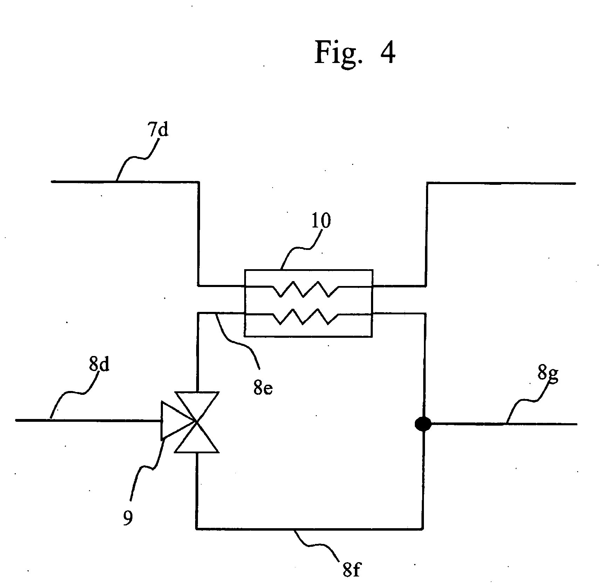

In a second embodiment shown in Fig. 3, a configuration according to the present invention of the hot-water temperature adjusting apparatus 5 will be described. In the comparative embodiments shown in Figs. 4 to 6, comparative configurations of the hot-water temperature adjusting apparatus 5 will be described.

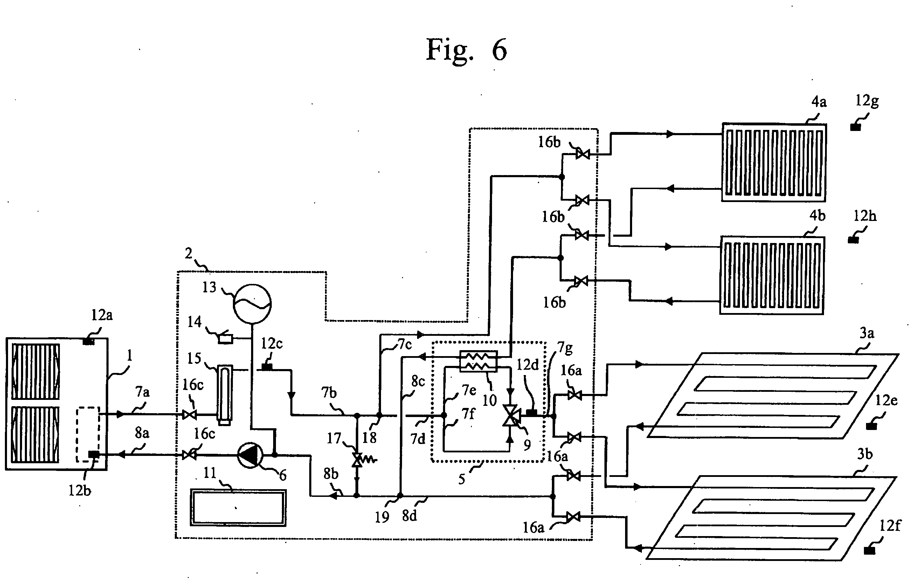

Figs. 3 to 6 are views showing the different configurations of the hot-water temperature adjusting apparatus 5. Figs. 3 to 5 show the area of the hot-water temperature adjusting apparatus 5 indicated by dashed lines in Fig. 1. Fig. 6 shows an overall configuration of the hot-water heating system.

The hot-water temperature adjusting apparatus 5 shown in Fig. 3 differs from the hot-water temperature adjusting apparatus 5 shown in Fig. 1 in the position of the mixing valve 9. The hot-water temperature adjusting apparatus 5 shown in Fig. 1 includes the mixing valve 9 at the joining point of the supply pipe 7e and the supply pipe 7f. The hot-water temperature adjusting apparatus 5 shown in Fig. 3 includes the mixing valve 9 at the branching point of the supply pipe 7e and the supply pipe 7f.

In the hot-water temperature adjusting apparatus 5 shown in Fig. 4, the supply pipe 7 is not branched, and the return pipe 8 is branched. That is, in the hot-water temperature adjusting apparatus 5 shown in Fig. 1, the supply pipe 7d is branched into the supply pipe 7e and the supply pipe 7f, and heat exchange is effected between the hot water flowing through the supply pipe 7e and the hot water flowing through the return pipe 8d. In the hot-water temperature adjusting apparatus 5 shown in Fig. 4, the supply pipe 7d is not branched into the supply pipe 7e and the supply pipe 7f. However, in the hot-water temperature adjusting apparatus 5 shown in Fig. 4, a return pipe 8g connected to the low-temperature heating appliance 3 is branched into a return pipe 8e and a return pipe 8f. The return pipe 8e and the return pipe 8f are joined again at the mixing valve 9 so as to form the return pipe 8d. In the hot-water temperature adjusting apparatus 5 shown in Fig. 4, heat exchange is effected between the hot water flowing through the return pipe 8e and the hot water flowing through the supply pipe 7d.

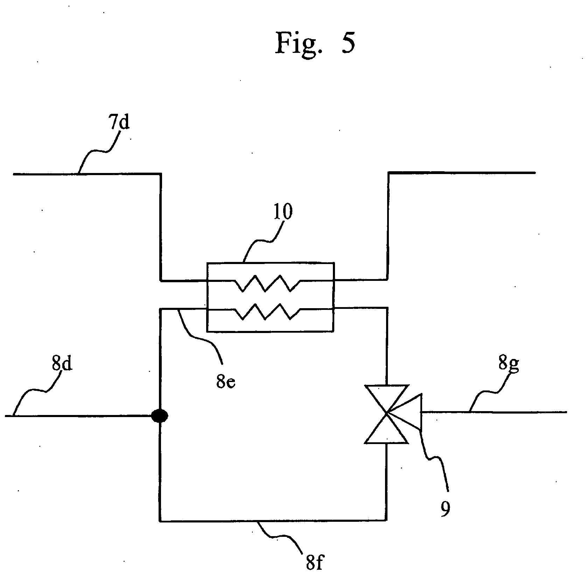

The hot-water temperature adjusting apparatus 5 shown in Fig. 5 differs from the hot-water temperature adjusting apparatus 5 shown in Fig. 4 in the position of the mixing valve 9. The hot-water temperature adjusting apparatus 5 shown in Fig. 4 includes the mixing valve 9 at the joining point of the return pipe 8e and the return pipe 8f. The hot-water temperature adjusting apparatus 5 shown in Fig. 5 includes the mixing valve 9 at the branching point of the return pipe 8e and the return pipe 8f.

The hot-water temperature adjusting apparatus 5 in the hydro unit 2 shown in Fig. 6 differs from the hot-water temperature adjusting apparatus 5 shown in Fig. 1 in the pipes where heat exchange is effected. In the hot-water temperature adjusting apparatus 5 shown in Fig. 1, heat exchange is effected between the hot water to be supplied to the low-temperature heating appliance 3 and the hot water (the return water) which has been supplied to the low-temperature heating appliance 3. However, in the hot-water temperature adjusting apparatus 5 shown in Fig. 6, heat exchange is effected between the hot water to be supplied to the low-temperature heating appliance 3 and the hot water (the return water) which has been supplied to the high-temperature heating appliance 4. That is, the supply pipe 7e and the return pipe 8c pass through the heat exchanger 10, and heat exchange is effected between the hot water flowing through the supply pipe 7e and the hot water flowing through the return pipe 8c.

Applications described based on Figs. 3 to 5 can also be adapted when heat exchange is effected between the hot water to be supplied to the low-temperature heating appliance 3 and the hot water (the return water) which has been supplied to the high-temperature heating appliance 4. That is, the mixing valve 9 may be positioned at the branching point instead of the joining point. The pipe to be branched may be the return pipe 8 instead of the supply pipe 7.

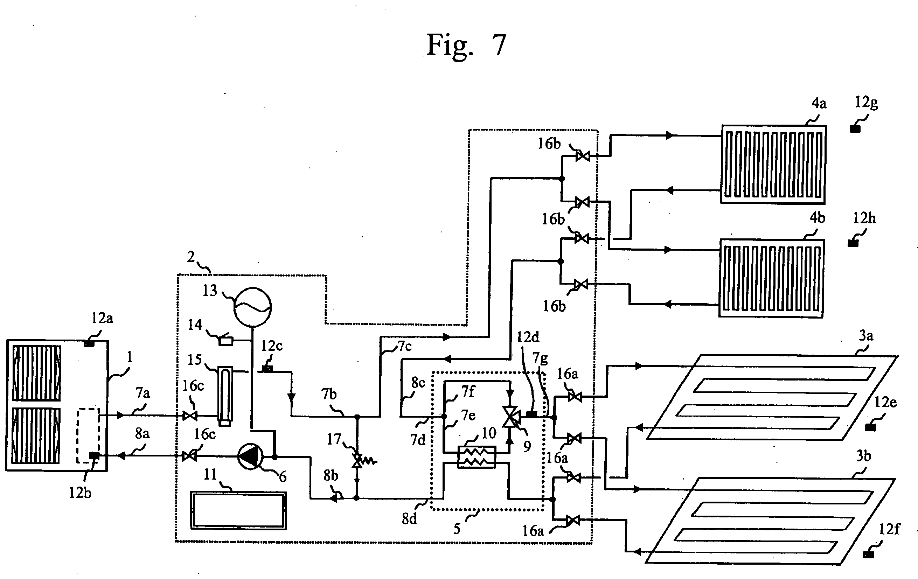

The hydro unit 2 shown in Fig. 7 differs from the hydro unit 2 shown in Fig. 1 in the flow of the hot water. In the hydro unit 2 shown in Fig. 7, the hot water (the return water) which has been supplied to the high-temperature heating appliance 4 and from which heat has been radiated passes through the hot-water temperature adjusting apparatus 5, where the temperature of the hot water is adjusted. The hot water is then supplied to the low-temperature heating appliance 3. That is, in the hydro unit 2 shown in Fig. 7, the high-temperature heating appliance 4 and the low-temperature heating appliance 3 are connected in series, and the hot water from which heat has been radiated by the high-temperature heating appliance 4 passes through the hot-water temperature adjusting apparatus 5, where the temperature of the hot water is adjusted. The hot water is then supplied to the low-temperature heating appliance 3.

The applications described based on Figs. 3 to 5 can also be adapted when the high-temperature heating appliance 4 and the low-temperature heating appliance 3 are connected in series. That is, the mixing valve 9 may be positioned at the branching point instead of the joining point. The pipe to be branched may be the return pipe 8 instead of the supply pipe 7.

Further, a pipe may be provided such that the hot water flowing through the supply pipe 7b flows to the supply pipe 7d without passing through the high-temperature heating appliance 4. In this case, a valve may be provided in order to switch between having the hot water flow from the supply pipe 7b to the high-temperature heating appliance 4 and having the hot water flow from the supply pipe 7b to the supply pipe 7d, based on whether or not the high-temperature heating appliance 4 is requesting the hot water.

As has been described, with the different configurations of the hot-water temperature adjusting apparatus 5, it is possible to obtain the same effects as those obtained by the hot-water heating system according to the first embodiment.

However, when the supply pipe 7 is not branched and the return pipe 8 is branched as shown in Figs. 4 and 5, the hot water flowing through the supply pipe 7d always passes through the heat exchanger 10. That is, the hot water flowing through the supply pipe 7d always passes through the heat exchanger 10 even when heat exchange by the heat exchanger 10 is not required. Thus, when the return pipe 8 is branched, efficiency may be reduced compared to when the supply pipe 7 is branched.

### Third embodiment

In a third embodiment, a heating system having a hot-water supply capability will be described.

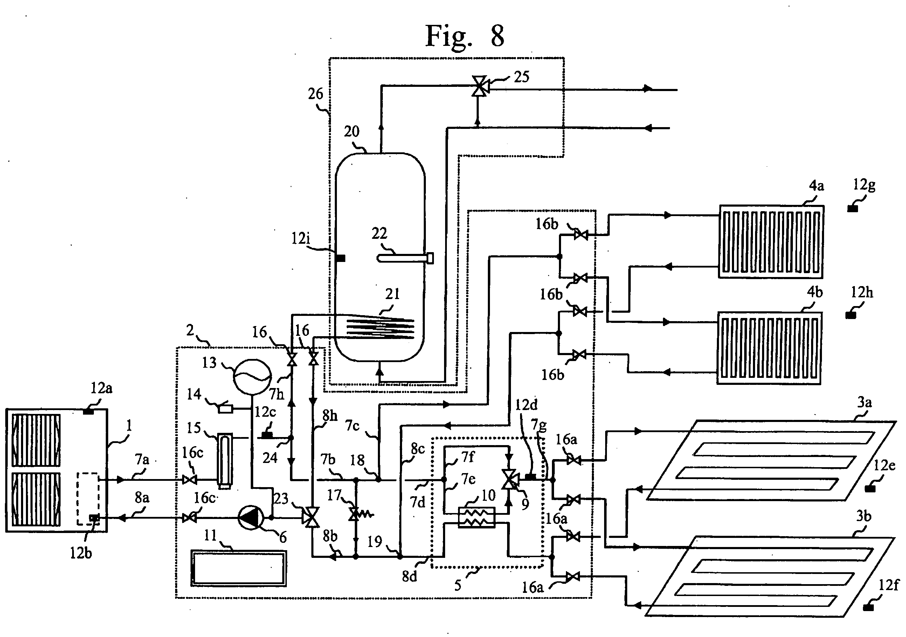

Fig. 8 is a fluid circuit diagram of the heating system having the hot-water supply capability. As with the first embodiment, in the following description, water (hot water) will be used as an example of a fluid. That is, the heating system shown in Fig. 8 is a hot-water heating system having the hot-water supply capability.

The hot-water heating system shown in Fig. 8 further includes a hot-water supply apparatus 26 in addition to the hot-water heating system shown in Fig. 1.

The hot-water supply apparatus 26 heats the hot water stored in a hot-water storage tank 20 by using the hot water flowing through a hot-water supply heating coil 21. Then, the hot-water supply apparatus 26 supplies the heated hot water by controlling the degree of opening of a three-way valve 25.

The supply pipe 7b of the hydro unit 2 is branched into a supply pipe 7h at a supply pipe branching point 24. The supply pipe 7h is connected to the hot-water supply heating coil 21 of the hot-water supply apparatus 26. A return pipe 8h is connected to the hot-water supply heating coil 21. The return pipe 8h is joined to the return pipe 8b at a three-way valve 23. Other aspects of the configuration of the pipes are the same as shown in Fig. 1.

A cycle of the hot water during operation of the hot-water heating system will be described.

The hot-water heating system operates by switching between heating operation and hot-water supply operation. Based on an instruction from a user of the hot-water heating system, the control unit 11 switches between the heating operation and the hot-water supply operation. The control unit 11 switches between the heating operation and the hot-water supply operation by changing a port of the three-way valve 23 to be opened. That is, when a port of the three-way valve 23 at the side of the return pipe joining point 19 is opened and a port thereof at the side of the return pipe 8h is closed, the heating operation is performed. On the other hand, when the port of the three-way valve 23 at the side of the return pipe 8h is opened and the port thereof at the side of the return pipe joining point 19 is closed, the hot-water supply operation is performed.

The flow of the hot water during the heating operation is as has been described in the first embodiment. Thus, the description as to the flow of the hot water during the heating operation will be omitted, and the flow of the hot water during the hot-water supply operation will be described.

First, the hot water discharged from the circulating pump 6 is heated by the heat source 1. The hot water heated by the heat source 1 flows through the supply pipe 7a, and is heated by the heater 15 to a temperature required by the hot-water supply heating coil 21. The hot water heated by the heater 15 flows through the supply pipe 7b, and flows from the supply pipe branching point 24 to the supply pipe 7h. Because the three-way valve 23 is closed at the side of the return pipe joining point 19, the hot water does not flow from the supply pipe branching point 24 to the supply pipe branching point 18. Thus, the hot water is not supplied to the low-temperature heating appliance 3 and the high-temperature heating appliance 4. The hot water flowing through the supply pipe 7h is supplied to the hot-water supply heating coil 21, and heat from the hot water is radiated by the hot-water supply heating coil 21. The hot water from which heat has been radiated by the hot-water supply heating coil 21 flows through the return pipe 8h, and then flows from the three-way valve 23 to the return pipe 8b. The hot water flowing through the return pipe 8b is absorbed by the circulating pump 6. The above process is repeated so as to supply the hot water at a required temperature to the hot-water supply apparatus 26.

During the heating operation, the port of the three-way valve 23 at the side of the return pipe 8h is closed, so that the hot water does not flow from the supply pipe branching point 24 to the return pipe 8h. Thus, the hot water is not supplied to the hot-water supply heating coil 21.

By using a temperature sensor 12i, the control unit 11 measures the temperature of the hot water stored in the hot-water storage tank 20. Based on the temperature measured by the temperature sensor 12i, the control unit 11 controls the heat source 1 and the heater 15. That is, the control unit 11 controls the heat source 1 and the heater 15 such that the temperature measured by the temperature sensor 12i is at a required value.

When the hot water stored in the hot-water storage tank 20 cannot be sufficiently heated only through heating by the hot-water supply heating coil 21, the control unit 11 further heats the hot water stored in the hot-water storage tank 20 by a heater 22.

As has been described, even in the hot-water heating system having the hot-water supply capability, the hot water can be simultaneously supplied to the low-temperature heating appliance 3 at the temperature required by the low-temperature heating appliance 3 and to the high-temperature heating appliance 4 at the temperature required by the high-temperature heating appliance 4.

### Fourth embodiment

In a fourth embodiment, a heating system including high-temperature heating appliances 4c and 4d will be described, the heating appliances 4c and 4d requiring a fluid at a temperature different from the temperature required by the low-temperature heating appliances 3a and ab and the temperature required by the high-temperature heating appliances 4a and 4b. Here, it is assumed that the high-temperature heating appliances 4c and 4d require the fluid at a temperature higher than the temperature required by the high-temperature heating appliances 4a and 4b.

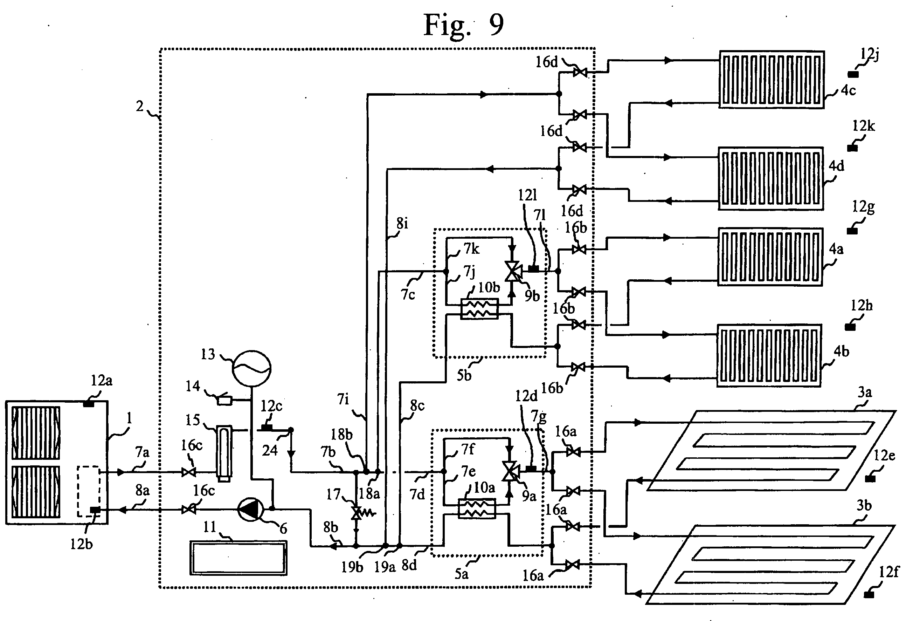

Fig. 9 is a fluid circuit diagram of the heating system including the high-temperature heating appliances 4c and 4d. As with the first embodiment, in the following description, water (hot water) will be used as an example of a fluid. That is, the heating system shown in Fig. 9 is a hot-water heating system

The supply pipe 7b is branched into a supply pipe 7i at a supply pipe branching point 18b. The supply pipe 7i is connected to the high-temperature heating appliances 4c and 4d. A return pipe 8i is connected at one end thereof to the high-temperature heating appliances 4c and 4d. The other end of the return pipe 8i is joined to the return pipe 8b at a return pipe joining point 19b. The supply pipe 7b is branched into the supply pipe 7c and the supply pipe 7d at a supply pipe branching point 18a.

The supply pipe 7d is further branched into the supply pipe 7e (the first supply pipe) and the supply pipe 7f (the second supply pipe). The supply pipe 7e and the supply pipe 7f are joined again at a mixing valve 9a as the supply pipe 7g (the mixed supply pipe). That is, the supply pipe 7e and the supply pipe 7f are pipes provided in parallel. The supply pipe 7e passes through a heat exchanger 10a. The supply pipe 7g is connected to the low-temperature heating appliance 3. The return pipe 8d is connected at one end thereof to the low-temperature heating appliance 3. The other end of the return pipe 8d is joined at a return pipe joining point 19a so as to form the return pipe 8b. The return pipe 8d passes through the heat exchanger 10a. That is, heat exchange is effected between the hot water flowing through the supply pipe 7e and the hot water flowing through the return pipe 8d.

On the other hand, the supply pipe 7c is branched into a supply pipe 7j (a first supply pipe) and a supply pipe 7k (a second supply pipe). The supply pipe 7j and the supply pipe 7k are joined again at a mixing valve 9b so as to form a supply pipe 71 (a mixed supply pipe). That is, the supply pipe 7j and the supply pipe 7k are pipes provided in parallel. The supply pipe 7j passes through a heat exchanger 10b. The supply pipe 71 is connected to the high-temperature heating appliances 4a and 4b. The return pipe 8c is connected at one end thereof to the high-temperature heating appliances 4a and 4b. The other end of the return pipe 8c is joined at the return pipe joining point 19a so as to form the return pipe 8b. The return pipe 8c passes through the heat exchanger 10b. That is, heat exchange is effected between the hot water flowing through the supply pipe 7j and the hot water flowing through the return pipe 8c.

Here, a circuit configured with the supply pipes 7d, 7e, 7f, and 7g, the return pipe 8d, the mixing valve 9a, and the heat exchanger 10a will be referred to as a hot-water temperature adjusting apparatus 5a. Likewise, a circuit configured with the supply pipes 7c, 7j, 7k, and 71, the return pipe 8c, the mixing valve 9b, and the heat exchanger 10b will be referred to as a hot-water temperature adjusting apparatus 5b. In Fig. 9, the hot-water temperature adjusting apparatuses 5a and 5b are indicated by dashed lines. In the hot-water temperature adjusting apparatuses 5a and 5b, the hot water heated by the heater 15 to the temperature required by the high-temperature heating appliances 4c and 4d is cooled to the temperature required by the high-temperature heating appliances 4a and 4b and the temperature required by the low-temperature heating appliance 3.

A cycle of the hot water during operation of the hot-water heating system will be described.

First, the hot water discharged from the circulating pump 6 is heated by the heat source 1. The hot water heated by the heat source 1 flows through the supply pipe 7a, and is heated by the heater 15 to the temperature required by the high-temperature heating appliances 4c and 4d. The hot water heated by the heater 15 flows through the supply pipe 7b, and is branched into the supply pipe 7i at the supply pipe branching point 18b. The hot water flowing through the supply pipe 7i is supplied to the high-temperature heating appliances 4c and 4d and heat from the hot water is radiated by the high-temperature heating appliances 4c and 4d. On the other hand, the hot water flowing through the supply pipe 7b without being branched into the supply pipe 7i is branched into the supply pipe 7c and the supply pipe 7d at the supply pipe branching point 18a.

The hot water flowing through the supply pipe 7c is branched into the supply pipe 7j and the supply pipe 7k, is joined again at the mixing valve 9b, and flows through the supply pipe 71. At this time, in the hot-water temperature adjusting apparatus 5b, the hot water is adjusted to the temperature required by the high-temperature heating appliances 4a and 4b. The hot water flowing through the supply pipe 71 is supplied to the high-temperature heating appliances 4a and 4b, and heat from the hot water is radiated by the high-temperature heating appliances 4a and 4b. On the other hand, the hot water flowing through the supply pipe 7d is branched into the supply pipe 7e and the supply pipe 7d, is joined again at the mixing valve 9a, and flows through the supply pipe 7g. At this time, in the hot-water temperature adjusting apparatus 5a, the hot water is adjusted to the temperature required by the low-temperature heating appliance 3. The hot water flowing through the supply pipe 7g is supplied to the low-temperature heating appliance 3, and heat from the hot water is radiated by the low-temperature heating appliance 3.

Operations of the hot-water temperature adjusting apparatuses 5a and 5b are the same as described for the hot-water temperature adjusting apparatus 5 according to the first embodiment.

As has been described, in the hot-water heating system, even when there are three types of heating appliances each requiring a different temperature, the hot water can be simultaneously supplied to each heating appliance at a temperature required by each heating appliance. Further, surplus heat is collected into the return water, thereby enhancing thermal efficiency and leading to reduced energy consumption.

When there are four or more types of heating appliances each requiring a different temperature, the hot water can be simultaneously supplied to each heating appliance at a temperature required by each heating appliance by providing the hot-water temperature adjusting apparatus 5 at pipes of heating appliances other than a heating appliance that requires the highest temperature.

The high-temperature heating appliances 4c and 4d shown in Fig. 9 may be replaced with the hot-water supply apparatus 26. In the example described in the third embodiment, the hot-water heating system is configured to operate by switching between the hot-water supply operation and the heating operation. By replacing the high-temperature heating appliances 4c and 4d shown in Fig. 9 with the hot-water supply apparatus 26, the hot-water supply operation and the heating operation can be performed simultaneously.

The above is summarized as follows:
The hot-water heating system according to the above embodiments includes a pipe for temperature adjustment that branches in parallel from a supply pipe from a heat source to a load such as a hot-water heating appliance; a return pipe from the load such as the hot-water heating appliance; a heat exchanger that exchanges heat between hot water at a relatively high temperature flowing through the pipe for temperature adjustment and hot water at a relatively low temperature flowing through the return pipe; and a mixing valve that mixes the hot water at a relatively high temperature flowing through the supply pipe and the hot water at a relatively low temperature flowing through the pipe for temperature adjustment after heat exchange by the heat exchanger, and adjusts a mixture ratio thereof. The hot-water heating system is equipped with a hot-water temperature adjusting apparatus capable of adjusting the temperature of the hot water supplied to the load such as the hot-water heating appliance and collecting into the return water surplus heat generated during adjustment of the temperature of the hot water.

The hot-water heating system according to the above embodiments includes a sensor for detecting the temperature of the hot water supplied to the load such as the hot-water heating appliance; and a control appliance that uses the mixing valve to control a mixture ratio of two types of the hot water such that the temperature of the hot water supplied to the load such as the hot-water heating appliance is adjusted to a predetermined value. The hot-water heating system is equipped with the hot-water temperature adjusting apparatus capable of adjusting the temperature of the hot water supplied to the load such as the hot-water heating appliance as requested and collecting into the return water surplus heat of the hot water at a high temperature from the heat source.

The hot-water heating system according to the above embodiments is a hot-water heating system, wherein the heat source, the circulating pump, a hot-water heating appliance that requires hot water at a high temperature (hereinafter a hot-water heating appliance A) and a hot-water heating appliance that requires hot water at a temperature lower than a temperature required by the hot-water heating appliance A (hereinafter a hot-water heating appliance B), the hot-water heating appliance A and the hot-water heating appliance B being connected in parallel, are connected in a circular manner by a pipe forming means, and the hot water is supplied from the heat source to the hot-water heating appliance A and the hot-water heating appliance B. The hot-water heating system includes the hot-water temperature adjusting apparatus located between the hot-water heating appliance B and a branching point of a supply pipe for hot-water heating for supplying the hot water to the hot-water heating appliance A and the hot-water heating appliance B as well as a joining point of a return pipe for hot-water heating from the hot-water heating appliance A and the hot-water heating appliance B. The hot-water heating system is capable of simultaneously supplying the hot water at a high temperature to the hot-water heating appliance A and the hot water according to a required temperature to the hot-water heating appliance B, respectively.

The hot-water heating system according to the above embodiments is a hot-water heating system, wherein the heat source, the circulating pump, the hot-water heating appliance that requires the hot water at a high temperature (hereinafter the hot-water heating appliance A), and the hot-water heating appliance that requires the hot water at a temperature lower than the temperature required by the hot-water heating appliance A (hereinafter the hot-water heating appliance B), the hot-water heating appliance A and the hot-water heating appliance B being connected in parallel, are connected in a circular manner by the pipe forming means, and the hot water is supplied from the heat source to the hot-water heating appliance A and the hot-water heating appliance B. The hot-water heating system includes a hot-water storage tank; a coil for heating water or hot water in the hot-water storage tank; a supply pipe for hot-water supply that supplies the hot water at a relatively high temperature to the coil for heating, the supply pipe for hot-water supply being located between the heat source and a branching point of the supply pipe for hot-water heating for supplying the hot water to the hot-water heating appliance A and the hot-water heating appliance B; a return pipe for hot-water supply that joins the hot water at a relatively low temperature from which heat has been radiated by the coil for heating, the return pipe for hot-water supply being located between the heat source and a joining point of the supply pipe for hot-water heating from the hot-water heating appliance A and the hot-water heating appliance B; and a three-way valve located at a branching point of the pipe for hot-water heating and the supply pipe for hot-water supply or a joining point of the return pipe for hot-water heating and the return pipe for hot-water supply. The hot-water heating system further includes a hot-water supply capability, and is capable of switching between supplying the hot water to the coil for heating (hot-water supply operation) and supplying the hot water to the hot-water heating appliance A and the hot-water heating appliance B (hot-water heating operation) by switching of the three-way valve.

The hot-water heating system according to the above embodiments, the hot-water heating system according to the present invention is a hot-water heating system, wherein the heat source, the circulating pump, the hot-water heating appliance that requires the hot water at a relatively high temperature (hereinafter the hot-water heating appliance A), and the hot-water heating appliance that requires the hot water at a temperature lower than the temperature required by the hot-water heating appliance A (hereinafter the hot-water heating appliance B), the hot-water heating appliance A and the hot-water heating appliance B being connected in parallel, are connected in a circular manner by the pipe forming means, and the hot water is supplied from the heat source to the hot-water heating appliance A and the hot-water heating appliance B. The hot-water heating system includes the hot-water temperature adjusting apparatus located between the hot-water heating appliance B and the branching point of the supply pipe for hot-water heating for supplying the hot water to the hot-water heating appliance A and the hot-water heating appliance B as well as the joining point of the return pipe for hot-water heating from the hot-water heating appliance A and the hot-water heating appliance B; and the sensor for detecting the temperature of the hot water supplied to the hot-water heating appliance B.

The hot-water heating appliance according to the above embodiments is a hot-water heating system, wherein the hot-water temperature adjusting apparatus includes the pipe for temperature adjustment that branches in parallel from the supply pipe from the heat source to the load such as the hot-water heating appliance; the return pipe from the load such as the hot-water heating appliance; the heat exchanger that exchanges heat between the hot water at a relatively high temperature flowing through the supply pipe and the hot water at a relatively low temperature flowing through the return pipe; and the mixing valve that mixes the hot water at a relatively high temperature flowing through the supply pipe and the hot water at a relatively low temperature flowing through the pipe for temperature adjustment after heat exchange by the heat exchanger, and adjusts the mixture ratio thereof.

### Brief Description of Drawings

Fig. 1 is a fluid circuit diagram of a heating system;
Fig. 2 is a flowchart showing a process for adjusting the temperature of mixed hot water;
Fig. 3 is a diagram showing a configuration according to the present invention of a hot-water temperature adjusting apparatus 5;
Fig. 4 is a diagram showing a configuration of the hot-water temperature adjusting apparatus 5;
Fig. 5 is a diagram showing a configuration of the hot-water temperature adjusting apparatus 5;
Fig. 6 is a diagram showing a configuration of a hydro unit 2;
Fig. 7 is a diagram showing a configuration of the hydro unit 2;
Fig. 8 is a fluid circuit diagram of a heating system including a hot-water supply capability; and
Fig. 9 is a fluid circuit diagram of a heating system including high-temperature heating appliances 4c and 4d.

### Reference Signs List

1: heat source, 2: hydro unit, 3: low-temperature heating appliance, 4: high-temperature heating appliance, 5: hot-water temperature adjusting apparatus, 6: circulating pump, 7: supply pipe, 8: return pipe, 9: mixing valve, 10: heat exchanger, 11: control unit, 12: temperature sensor, 13: expansion tank, 14: pressure relief valve, 15: heater, 16: valve, 17: anti-freezing pipe, 18: supply pipe branching point, 19: return pipe joining point, 20: hot-water storage tank, 21: hot-water supply heating coil, 22: heater, 23, 25: three-way valves, 24: supply pipe branching point, 26: hot-water supply apparatus

## Claims

1. A temperature adjusting apparatus comprising:
a heat exchanger (10);
a high-temperature radiator;
a parent supply pipe (7d) arranged for being flowed through by a high-temperature fluid to be supplied to the high-temperature radiator;
a high-temperature pipe (7c) which is branched from the parent supply pipe and is connected to the high-temperature radiator;
a first supply pipe (7e) which is branched from the parent supply pipe and passes through the heat exchanger (10);
a second supply pipe (7f) which is branched from the parent supply pipe;
a mixed supply pipe (7g) arranged for being flowed through by a mixed fluid being a mixture of a first portion of the fluid which has flowed through the first supply pipe (7e) and a second portion of the fluid which has flowed through the second supply pipe (7f), wherein the mixed supply pipe is to be connected, in use, to a low-temperature radiator;
a return pipe (8d) arranged for being flowed through by the mixed fluid which has been supplied to the low-temperature radiator and from which heat has been radiated, the return pipe (8d) passing through the heat exchanger (10);
a mixture adjusting valve (9) that is configured to adjust a temperature of the mixed fluid by adjusting a mixture ratio of the first portion of the fluid and the second portion of the fluid in the mixed fluid;
a temperature sensor (12d) provided at the mixed supply pipe (7g); and
a control unit (11) that is configured to measure the temperature of the mixed fluid by using the temperature sensor (12d) provided at the mixed supply pipe (7g), and to adjust the degree of opening of the mixture adjusting valve (9) according to the measured temperature.

2. The temperature adjusting apparatus according to claim 1,
wherein the temperature adjusting apparatus is arranged such that the fluid which has flowed through the return pipe (8d) and has been heated by a heating apparatus (1) flows through the parent supply pipe (7d).

3. The temperature adjusting apparatus according to claim 1 or claim 2,
wherein the mixed supply pipe (7g) includes a flow volume adjusting valve that adjusts a flow volume of the fluid to be supplied to the low-temperature radiator.

4. An installation method of a temperature adjusting apparatus, the method comprising:
connecting the temperature adjusting apparatus according to any one of claims 1 to 3 to a heating apparatus (1) for heating a fluid such that a fluid which has flowed through the return pipe (8d) is supplied to the heating apparatus, and the fluid heated by the heating apparatus is supplied to the parent supply pipe (7d); and
connecting the temperature adjusting apparatus to the low-temperature radiator such that the fluid which has flowed through the mixed supply pipe (7g) is supplied to the low-temperature radiator and the fluid which has been supplied to the low-temperature radiator is supplied to the return pipe (8d).

## Patentansprüche

1. Temperatureinstellvorrichtung, umfassend:
einen Wärmetauscher (10);
einen Hochtemperaturradiator;
eine Hauptzuführleitung (7d), die angeordnet ist, um von einem Hochtemperaturfluid durchströmt zu werden, das dem Hochtemperaturradiator zugeführt werden soll;
eine Hochtemperaturleitung (7c), die von der Hauptzuführleitung abgezweigt ist und mit dem Hochtemperaturradiator verbunden ist;
eine erste Zuführleitung (7e), die von der Hauptzuführleitung abgezweigt ist und den Wärmetauscher (10) durchläuft;
eine zweite Zuführleitung (7f), die von der Hauptzuführleitung abgezweigt ist;
eine Mischzuführleitung (7g), die angeordnet ist, um von einem Mischfluid durchströmt zu werden, das eine Mischung ist aus einem ersten Teil des Fluids, das durch die erste Zuführleitung (7e) geströmt ist, und einem zweiten Teil des Fluids, das durch die zweite Zuführleitung (7f) geströmt ist, wobei die Mischzuführleitung im Gebrauch mit einem Niedertemperaturradiator zu verbinden ist;
eine Rücklaufleitung (8d), die angeordnet ist, um von dem Mischfluid durchströmt zu werden, das dem Niedertemperaturradiator zugeführt wurde und von dem Wärme abgestrahlt wurde, wobei die Rücklaufleitung (8d) den Wärmetauscher (10) durchläuft;
ein Mischungseinstellventil (9), das dazu eingerichtet ist, eine Temperatur des Mischfluids durch Einstellen eines Mischungsverhältnisses des ersten Teils des Fluids und des zweiten Teils des Fluids in dem Mischfluid einzustellen;
einen Temperatursensor (12d), der an der Mischzuführleitung (7g) vorgesehen ist; und
eine Steuereinheit (11), die dazu eingerichtet ist, die Temperatur des Mischfluids durch Verwendung des Temperatursensors (12d) zu messen, der an der Mischzuführleitung (7g) vorgesehen ist, und den Öffnungsgrad des Mischungseinstellventils (9) entsprechend der gemessenen Temperatur einzustellen.

2. Temperatureinstellvorrichtung nach Anspruch 1, wobei die Temperatureinstellvorrichtung so angeordnet ist, dass das Fluid, das durch die Rücklaufleitung (8d) geströmt ist und durch eine Erwärmungsvorrichtung (1) erwärmt wurde, durch die Hauptzuführleitung (7d) strömt.

3. Temperatureinstellvorrichtung nach Anspruch 1 oder Anspruch 2, wobei die Mischzuführleitung (7g) ein Strömungsvolumeneinstellventil umfasst, das ein Strömungsvolumen des Fluids, das dem Niedertemperaturradiator zugeführt werden soll, einstellt.

4. Installationsverfahren einer Temperatureinstellvorrichtung, wobei das Verfahren umfasst:
Verbinden der Temperatureinstellvorrichtung nach einem der Ansprüche 1 bis 3 mit einer Erwärmungsvorrichtung (1) zum Erwärmen eines Fluids, so dass ein Fluid, das durch die Rücklaufleitung (8d) geströmt ist, der Erwärmungsvorrichtung zugeführt wird, und das durch die Erwärmungsvorrichtung erwärmte Fluid der Hauptzuführleitung (7d) zugeführt wird; und
Verbinden der Temperatureinstellvorrichtung mit dem Niedertemperaturradiator, so dass das Fluid, das durch die Mischzuführleitung (7g) geströmt ist, dem Niedertemperaturradiator zugeführt wird, und das Fluid, das dem Niedertemperaturradiator zugeführt wurde, der Rücklaufleitung (8d) zugeführt wird.

## Revendications

1. Appareil de réglage de la température comprenant :
un échangeur de chaleur (10) ;
un radiateur à haute température ;
une canalisation d'alimentation parente (7d) agencée afin d'être traversée par un fluide à haute température à fournir au radiateur à haute température ;
une canalisation à haute température (7c) qui se ramifie à partir de la canalisation d'alimentation parente, et qui est connectée au radiateur à haute température ;
une première canalisation d'alimentation (7e) qui se ramifie à partir de la canalisation d'alimentation parente, et qui passe à travers l'échangeur de chaleur (10) ;
une seconde canalisation d'alimentation (7f) qui se ramifie à partir de la canalisation d'alimentation parente ;
une canalisation d'alimentation mélangée (7g) agencée afin d'être traversée par un fluide mélangé composé d'un mélange d'une première partie du fluide qui a circulé à travers la première canalisation d'alimentation (7e), et d'une seconde partie du fluide qui a circulé à travers la seconde canalisation d'alimentation (7e), où la canalisation d'alimentation mélangée doit être connectée, en service, à un radiateur à basse température ;
une canalisation de retour (8d) agencée afin d'être traversée par le fluide mélangé qui a été fourni au radiateur à basse température et duquel la chaleur a été rayonnée, la canalisation de retour (8d) passant à travers l'échangeur de chaleur (10) ;
une soupape de réglage de mélange (9) qui est configurée afin de régler la température du fluide mélangé en réglant le rapport de mélange de la première partie du fluide et de la seconde partie du fluide dans le fluide mélangé ;
un capteur de température (12d) disposé au niveau de la canalisation d'alimentation mélangée (7g) ; et
une unité de commande (11) qui est configurée afin de mesurer la température du fluide mélangé à l'aide du capteur de température (12d) disposé au niveau de la canalisation d'alimentation mélangée (7g), et de régler le degré d'ouverture de la soupape de réglage de mélange (9) selon la température mesurée.

2. Appareil de réglage de la température selon la revendication 1,
où l'appareil de réglage de la température est agencé de telle sorte que le fluide qui a circulé à travers la canalisation de retour (8d) et qui a été chauffé par un appareillage de chauffage (1), circule à travers la canalisation d'alimentation parente (7d).

3. Appareil de réglage de la température selon la revendication 1 ou la revendication 2, où la canalisation d'alimentation mélangée (7g) comprend une soupape de réglage du volume d'écoulement qui règle le volume d'écoulement du fluide à fournir au radiateur à basse température.

4. Procédé d'installation d'un appareil de réglage de la température, le procédé comprenant les étapes suivantes :
connecter l'appareil de réglage de la température selon l'une quelconque des revendications 1 à 3, à un appareillage de chauffage (1) afin de chauffer un fluide, de telle sorte qu'un fluide qui a circulé à travers la canalisation de retour (8d), soit fourni à l'appareil de chauffage, et que le fluide chauffé par l'appareil de chauffage, soit fourni à la canalisation d'alimentation parente (7d) ; et
connecter l'appareil de réglage de la température au radiateur à basse température, de telle sorte que le fluide qui a circulé à travers la canalisation d'alimentation mélangée (7g), soit fourni au radiateur à basse température, et que le fluide qui a été fourni au radiateur à basse température, soit fourni à la canalisation de retour (8d).
